# EUROPEAN PATENT SPECIFICATION

(11) **EP 3 380 281 B1**
(45) Date of publication and mention of the grant of the patent: **27.05.2020**
(21) Application number: 16800957.9
(22) Date of filing: 23.11.2016
(51) Int. Cl.: B26B 25/00, A22B 5/16

(54) **ANNULAR KNIFE WITH A SENSOR FOR MEASURING THE CUTTING DEPTH OF A ROTATING KNIFE BLADE**
RINGFÖRMIGES MESSER MIT EINEM SENSOR ZUR MESSUNG DER SCHNITTTIEFE EINER ROTIERENDEN MESSERKLINGE
COUTEAU ANNULAIRE AYANT UN CAPTEUR POUR MESURER LA PROFONDEUR DE COUPE D'UNE LAME DE COUTEAU ROTATIVE

(30) Priority: 23.11.2015 DK 201500748
(43) Date of publication of application: 03.10.2018
(73) Proprietor: Teknologisk Institut, 2630 Taastrup (DK)
(72) Inventor: CHRISTENSEN, Lars Bager, 2630 Taastrup (DK)
(74) Representative: AWA Denmark A/S
(86) International application number: PCT/EP2016/078553
(87) International publication number: WO 2017/089397

(56) References cited:
- EP-A2- 1 464 227
- WO-A1-94/24874
- GB-A- 2 006 081
- US-A- 4 575 937
- US-A1- 2003 084 576

## Description

The invention concerns an annular knife or a circular knife with a sensor for determining the cutting depth of a rotating knife blade such as a Whizard knife or a rotating knife used for trimming meat e.g. at slaughterhouses, such as a Whizard Trimmer from Bettcher Industries. The invention also concerns a method for determining the cutting depth of a rotating knife and a system for performing trimming of meat pieces

### Background of invention

Livestock carcasses or meat pieces hereof are often trimmed by removing skin and/or fat to obtain a meat piece with a pre-determined appearance and/or to remove part of a fat layer. At least part of this trimming is often performed manually where an operator removes visible skin parts from the meat and trims the fat layer where the fat layer seems to be thicker than a recipe for the product indicates. Trimming meat is often performed using an annular knife and is based on the visual appearance of the meat piece according to visible skin sections and sections where the operator can see and/or has experience of a too thick fat layer. However, as biological variation exists between individual animals, similar meat pieces from animals raised together may vary e.g. according to the thickness of fat. An operator may thus remove too much or too little fat from a meat piece. By such a manual trimming of meat pieces the final thickness of the fat layer may vary along each meat piece and among meat pieces and may be too thin or too thick according to the determined fat thickness, resulting in variation from the determined appearance/quality of the product and thus a lower price of the product.

A rotating knife such as an annular knife can be (is usually) equipped with a solid contact area (termed a guide) in the form of a circular plate or a circular ring located within the circular (annular) rotating knife blade, such as disclosed for example in US 4,575,937. The distance or position of the solid contact area in relation to the rotating blade is fixed. By angling the knife in relation to the cutting plane it is possible to cut with different depths into the item. The guide, which may be a depth gauge, makes it easy for an operator to remove thin strips of e.g. fat or strips which each on a rough estimate has a fixed thickness and where the thickness is based on the operator's guess and experience according to determination of the thickness of the removed strips. The remaining fat layer on a meat piece may be too thin or too thick according to the requested thickness of a fat layer. However, it's the best the operator can do when keeping up the required speed of trimming the meat pieces.

The present invention relates to an annular knife with a sensor making it possible e.g. in real time to determine the thickness of removed skin/fat and thus to calculate the thickness of the fat layer being present on a meat piece while an operator is handling the meat piece, hereby the operator is informed if more fat should be removed from the meat piece.

Removal of fat from a meat piece improves the product yield and the appearance of the meat.

### Summary of invention

Disclosed is a knife with an annular knife blade and a sensor capable of determining the position of the knife in space and the angling of the knife hereby making it possible to determine the cutting depth of the knife as the cutting depth is a function of the angling of the knife. By communication data such as position and angling of knife and/or cutting depth to a processor a cutting process can be analyzed in real time, this may be a trimming process removing skin and/or fat from animal meat pieces or removing skin from a human donor and/or patient. The invention relates to an annular knife comprising at least
a) an annular knife holder,
b) an annular knife blade,
c) a handle or a robot connection unit, and
d) at least one orientation sensor.

According to the invention the sensor of the knife is mounted at the knife's solid parts, such as within the handle or within a frame protecting the sensor from exposure to e.g. water. The annular knife may further comprise a guide such as a depth gauge hereby making a cutting slit between the annular knife blade and the depth gauge. The angle of the slit determines how deep the knife can cut into an item.

The sensor may be a unit or package of e.g. 5.5 x 3.8 x 1.1 mm including one or more of the following features:
a. An absolute orientation sensor, such as an intelligent 9-axis absolute orientation sensor,
b. A rechargeable button cell,
c. A microcontroller, such as a 64-bit microcontroller,
d. A wireless data transmitter.

The absolute orientation sensor may comprise:
a. An accelerometer, such as a tri-axial accelerometer, and/or
b. A gyroscope, such as a tri-axial gyroscope, and/or
c. A geomagnetic sensor, such as a tri-axial geomagnetic sensor.

The invention also relates to a system for manual trimming of meat pieces, the system may comprise:
a. At least one annular knife as described herein,
b. At least one handling area for manual trimming at least one meat piece,
c. At least one outcome illustrating device, such as at least one monitor, located close to said handling area, said outcome illustrating device being capable of showing an outcome relating to a specific meat piece located at the handling area, and where such outcome is relating to thickness of fat present on the meat piece,
d. Optionally, at least one camera, such as a video camera, located close to the handling area, the at least one camera being capable of obtaining at least one image of at least one meat piece being located at the handling area,
e. At least one fat layer thickness determining means being located upstream of the handling area, the fat layer thickness determining means being capable of obtaining data relating to the thickness of fat present on a meat piece preferably without cutting or pricking into the meat piece, the fat layer thickness determining means may comprise at least one data collecting means based on ultrasound e.g. together with a vision system and/or based on X-rays for determining the thickness including variation hereof of a an outer fat layer and/or outer fat regions optionally including a skin layer,
f. At least one processor for processing data and producing an outcome relating to thickness of fat present on a meat piece and where data may be obtained from any of:
   a. by the fat layer thickness determining means,
   b. optionally by the at least one camera,
   c. from the annular knife with a sensor, and/or
   d. from an operator,
g. and the outcome of the processed data is illustrated by the outcome illustrating device, such as showed on a monitor e.g. as at least one image indicating e.g. fat layer thickness of a meat piece.

The invention also relates to a method for determining the cutting depth when cutting with an annular knife with a sensor, such as an annular knife as described herein, where a sensor mounted at the knife's solid part determines the absolute position and the orientation of the knife's solid part and determines the correlation between the knife's orientation in relation to the cutting plane and the resulting cutting depth. Preferably the sensor can read a quaternion description of the knife orientation in space.

The invention also relates to a method of trimming a meat piece with an annular knife as described herein as well as to use of the annular knife such as for: trimming animal meat pieces, removal of skin from a carcass or from a meat piece, removal of skin from a human, such as cutting thin layers or sections of skin tissue from humans.

### Brief description of figures

Fig. 1 illustrates an annular knife with an indication of a possible location for a sensor.
Fig. 2 illustrates the determined cutting depth of an annular knife with a sensor from time=0 to time=10.
Fig. 3 illustrates fat profiles along a meat product.
Fig. 4 illustrates a fat thickness map of a meat piece.
Fig. 5 illustrates a working station for trimming meat pieces.

### Detailed description of the invention

An aspect of the invention relates to an annular knife comprising at least
a. an annular knife holder,
b. an annular knife blade,
c. a handle or a robot connection unit, and
d. at least one orientation sensor.

Annular knives are generally known as Whizard knives and may be annular knives used for trimming meat e.g. at slaughterhouses, such as a Whizard Trimmer from Bettcher Industries. Such knives or other types of annular knives may be equipped with at least one orientation sensor making it possible to determine the absolute orientation of the knife within space and thus making it possible to determine a cutting depth during e.g. trimming of meat pieces.

The sensor of the annular knife may be located at any suitable place of the annular knife, preferably the sensor is mounted at the knife's solid parts, such as within one of the knife's solid parts, e.g. within the handle, within the frame, within the cover or within a thumb support. The sensor's location may be dependent on the design of the knife as well as what the knife should be used for. For cutting meat or trimming meat at abattoirs or other food producing companies the sensor may need to be located in a place where e.g. water, fat and/or other constituents from the meat cannot reach and destroy the sensor.

The annular knife may further comprise a guide such as a depth gauge hereby making a cutting slit between said annular knife blade and said depth gauge. The size of the cutting slit i.e. the distance between the annular knife blade and the depth gauge determines the maximum distance the annular knife can cut into an item such as a meat piece.

The depth gauge may have any design, such as:
i. an annular depth gauge i.e. with an open (non-complete) interior, however the annular depth gauge may be truly annular i.e. be located along all the part of the annular knife blade which is outside the frame, or the annular depth gauge may be partly annular where the depth gauge is only present along part of the annular knife blade which is outside the frame,
ii. a circular depth gauge i.e. with a solid interior or with apertures in the interior,
iii. a clothoid or partly spiral shaped depth gauge such that the edge of the depth gauge which is closest to the annular knife blade is not within the same distance to the annular knife blade along all the part of the depth gauge, hereby distance between the depth gauge edge and the cutting edge of the knife blade may vary from e.g. 0.5 mm to e.g. 10 mm along the part of the annular knife which is suitable for being used for trimming/cutting.

With an annular knife with a clothoid or partly spiral shaped depth gauge the operator may use different parts of the knife depending on how thick a fat layer should be removed in different areas of a meat piece as the cutting slit will vary depending on the distance from the knife blade to the depth gauge.

The depth gauge secures the knife only cuts with a certain thickness depending on the angle of the knife. If the knife is not angled in relation to the surface from where material should be cut away the annular knife and the depth gauge are in the same plane and the knife will not cut away any material. When the knife is angled in relation to the surface from where material should be cut away such that the annular knife is closer to the surface than the depth gauge then it is possible to cut away material. The larger the angle is, the deeper the knife may cut, though with limitations due to the depth gauge and dimension of the annular knife.

When trimming meat pieces such as pork loin or pork bellies and meat pieces of comparable sizes i.e. meat pieces which can be handled by a single operator at a handling station the surface of the meat piece may be assumed to be horizontal and hereby the orientation i.e. angling of the annular knife in relation to horizontal indicates the thickness of removed fat. Thickness determination with an annular knife as described herein may also be performed with other surface orientation e.g. vertical surfaces such as when trimming hanging carcasses e.g. cattle carcasses where the cutting depth is also determined according to the angle between the product surface and the knife plane. Algorithms used by a processor to e.g. determine the cutting depth may take the trimming direction and/or type of material to be cut into consideration.

The orientation sensor on the annular knife may be capable of determining the position of the knife i.e. of the sensor and the orientation of the knife i.e. how much the angle of the knife is in relation to e.g. horizontal. By mounting a sensor for determining the absolute position and orientation on the knife's fixed part it is possible to determine the relationship between the orientation of the knife in relation to the cutting plane and the resulting cutting depth.

The distance from the cutting part of the annular knife to the depth guide should preferably be known. This distance may be a standard distance when using a new knife, but during use and sharpening of the knife it is exposed to hard wear and the distance between the knife and the depth gauge increases giving an increased cutting depth for a similar angling of the knife when compared to a knife with a smaller distance between the knife blade and the depth gauge. From time to time the distance between the knife and the depth gauge should preferably be determined, this may be done manually e.g. by a ruler or by a camera. The distance can be communicated to a processor, which may include this distance in the calculations when determining the cutting depth.

The annular knife with a sensor may comprise one or more of the following features:
a. An absolute orientation sensor, such as an intelligent 9-axis absolute orientation sensor,
b. A rechargeable button cell,
c. A microcontroller, such as a 64-bit microcontroller, and/or
d. A wireless data transmitter.

The sensor can if desired be built together with a rechargeable button cell, a micro controller and if required together with a wireless data transmitter to function as a wireless determination of the cutting depth as a function of time.

The absolute orientation sensor may further comprise one or more of the following features:
a. An accelerometer, such as a tri-axial accelerometer,
b. A gyroscope, such as a tri-axial gyroscope,
c. A geomagnetic sensor, such as a tri-axial geomagnetic sensor.

Such a sensor can e.g. be made up with a BNO 055 (Bosch Sensortec) absolute orientation sensor which can read out a quaternion description of the knife orientation in space. Other types of sensors can also be used and may also read out to form a quaternion description of the knife orientation in space.

The sensor may further comprise one or more of the following features:
a. The sensor is a System in Package (SiP),
b. The sensor has a first dimension of less than 10 mm, e.g. less than 8 mm, such as less than 6 mm, such as about 5 mm,
c. The sensor has a second dimension of less than 6 mm, e.g. less than 5 mm, such as less than 4 mm,
d. The sensor has a third dimension of less than 4 mm, e.g. less than 3 mm, such as less than 2 mm, e.g. about 1 mm,
e. Sensor fusion algorithms, such as algorithms capable of determining three-dimensional rotation,
f. Software capable of communicating three-dimensional rotation, such as Quaternion communication,
g. Other features of the sensor may be one or more of the features:
   i. 9-axis sensor fusion algorithms,
   ii. Fast in-use background calibration of all sensors and calibration monitor,
   iii. Enhanced magnetic distortion detection and suppression,
   iv. Real-time motion tracking due to built-in group delay compensation,
   v. Gyroscope drift cancellation,
   vi. Support of 6-axis based applications,
   vii. Support of various power modes for switching on/off sensors and algorithm modules.

The sensor may be a small unit i.e. a System in Package comprising one or more of the features mentioned herein and the sensor may be capable of being mounted in or at the knife's solid parts and capable of determining e.g. the absolute position and angling of the knife and capable of communicate data wireless to a processor located outside the knife.

Another aspect of the invention relates to a system for manual trimming meat pieces, the system may comprise:
a. An annular knife with a sensor, such as an annular knife as described elsewhere herein,
b. A handling area for manual trimming at least one meat piece, the handling area is preferably organized such that the annular knife can be used at the handling area,
c. At least one outcome illustrating device, such as at least one monitor, located close to the handling area, the outcome illustrating device being capable of showing an outcome relating to a specific meat piece located at the handling area, and where such outcome is relating to thickness of fat present on the meat piece,
d. Optionally, at least one camera located close to the handling area, the at least one camera being capable of obtaining at least one image of at least one meat piece being located at the handling area,
e. A fat layer thickness determining means may be located upstream of the handling area, the fat layer thickness determining means may be capable of obtaining data relating to the thickness of fat present on a meat piece preferably without cutting or pricking into the meat piece, the fat layer thickness determining means may comprise at least one data collecting means based on ultrasound e.g. together with a vision system and/or may be based on X-rays for determining the thickness including variation hereof of a an outer fat layer and/or outer fat regions,
f. A processor for processing data and producing an outcome relating to thickness of fat present on a meat piece and where data may be obtained:
   i. by the fat layer thickness determining means,
   ii. optionally by the at least one camera, and
   iii. from the annular knife with a sensor,
and the outcome of the processed data may be illustrated by the outcome illustrating device, such as showed on a monitor e.g. as at least one image indicating e.g. fat layer thickness of a meat piece.

The annular knife with a sensor is preferably a knife driven by electricity, thus an electric installation is preferably present at the handling area.

An outcome illustrating device may be at least one monitor where the outcome can be illustrated by an image from which an operator may retrieve information in respect of the thickness of the fat layer i.e. in such a system the outcome is not projected towards the meat piece. An outcome illustrating device may also be a device projecting an outcome towards a meat piece which an operator is ready to trim or is trimming. Such outcomes projected towards a meat piece may be an image including lines and/or colors or it may be figures or simple lines projected onto the meat piece. An outcome illustrating device may also be a head mounted device or smart glasses which could show the outcome to an operator e.g. instead of showing the outcome at a monitor. The head mounted device or smart glasses could also be used for augmented reality where the meat piece in the handling area could be overlaid with the outcome produced in the system and this image could be shown in the head mounted device or in the smart glasses.

The outcome may be a fat thickness map or image which can be shown on a monitor and/or projected on the meat piece. A fat thickness map or image may illustrate the actual thickness of fat on a meat piece to be trimmed or it may illustrate the areas with a thickness of fat above one specific threshold or several different thresholds.

The fat thickness map may be an image with colors e.g. blue, green, yellow, orange and red where each color indicates a range of measured fat thicknesses or each color indicates how much fat should be removed in the area, as an alternative only areas with fat indicated by red color should be trimmed. As an example a fat thickness map is produced and the monitor may show the map or the corresponding fat side of a meat piece may be overlaid with a color coding with a nonlinear transformation where the product recipe dictates a fat cover of not more than e.g. 7 mm: Blue color indicate thicknesses below 7 mm so no fat trimming in the blue areas are required. The range between 7 mm and 15 mm is indicated in green (e.g. 7 to 11 mm) to yellow (e.g. 11 to 15 mm) colors and orange (e.g. 15 to 19 mm) to red (e.g. above 19 mm) accounts for areas with a fat thickness of above 15mm. The operator for this particular product is hereby informed where to trim and in coarse measures how much fat it is needed to remove by trimming. The color system may be adapted to the company e.g. in the number of used colors and/or the meaning of each color.

At least one camera may be located close to the handling area, the at least one camera may be capable of obtaining at least one image of at least one meat piece being located at the handling area. This image may be used to inform the system where the meat piece is located and how it is positioned and hereby making the system capable of showing the outcome in the correct position either on a monitor or projected towards the meat piece. The at least one camera may also be used to obtain information in respect of where the operator cuts away fat and/or other constituents of the meat piece and with the calculated depth of the cut based on the sensor data retrieved from the annular knife the system can calculate how much fat is left on the meat piece in the area where the operator has just cut away material. The information may be used to adjust the outcome and show a real time outcome of the amended fat layer on the monitor or in the information projected towards the meat piece. Hereby the operator is informed whether more fat should be removed in the treated area of the meat piece.

The at least one camera may also obtain images of the annular knife and especially of the area of the annular knife and the depth gauge. Data from such images may be communicated to the processor, and hereby the processor may calculate the distance between the annular knife and the depth gauge and compensate for the wearing of the knife in the determination of the cutting depth of the annular knife.

A fat layer thickness determining means may be located prior to the handling area to determine the fat layer thickness of meat pieces. The fat layer thickness determining means may use ultrasound e.g. together with a vision system and/or may use X-rays to determine the thickness and variation of the thickness of fat present on a meat piece. X-rays may be used by a CT-scanner scanning the meat piece. 3D maps may be made from CT scanning of the raw material e.g. meat pieces. The image stacks (tomograms) from the CT scanner, may be stored and form the input to a segmentation program, classifying the tissue density into three classes: meat, fat and bone by simple thresholding. From such 3D maps 2D maps (fat thickness maps) can be created of the thickness of fat on e.g. one side of the scanned material.

When trimming meat e.g. at abattoirs the carcasses are usually cut into meat pieces where the fat and/or skin to be removed is located on one side of the meat piece, hereby only one side of a meat piece should be analyzed in respect of fat thickness.

A processor of the system may retrieve any data or information obtained by the devices in the system and/or an operator may communicate data to the processor. The processor may thus be connected by wire or wireless to any of the devices in the system. The processor may use some or all of the retrieved data or information to produce an outcome or an amended outcome such as a real time outcome, and the processor may communicate this outcome to e.g. an outcome illustrating device.

In the system as described herein:
a. the outcome produced by the processor may be communicated to the outcome illustrating device, such as a monitor, and/or
b. the outcome may be shown on or by the at least one outcome illustrating device, such as shown on a monitor, when the meat piece from where data is obtained, is located in the handling area, and/or
c. based on data obtained from the annular knife during trimming the processor may determine how much fat and/or meat is cut away during the trimming of the meat piece, and/or
d. the at least one camera may obtain at least one image of the meat piece located in the handling area, such as to determine where the annular knife cuts away fat and/or meat from the meat piece, and/or
e. data from the annular knife and from the at least one camera may be processed real-time by a processor and based on data from the fat layer thickness determining means the at least one outcome on the outcome illustrating device may be adjusted to indicate the current fat layer thickness of an outer fat layer and/or outer fat regions.

A further aspect of the invention relates to a system for automatic trimming meat pieces, the system may comprise:
a. An annular knife with a sensor, such as an annular knife as described elsewhere herein and comprising a robot connection unit making it possible to mount the annular knife on a robot,
b. A handling area for automatic trimming at least one meat piece, the handling area is preferably organized such that the annular knife can be used by a robot at the handling area,
c. Optionally, at least one camera located close to the handling area, the at least one camera being capable of obtaining at least one image of at least one meat piece and/or of the location of the annular knife holder in relation to the meat piece being located at the handling area,
d. A fat layer thickness determining means may be located upstream of the handling area, the fat layer thickness determining means may be capable of obtaining data relating to the thickness of fat present on a meat piece preferably without cutting or pricking into the meat piece, the fat layer thickness determining means may comprise at least one data collecting means based on ultrasound e.g. together with a vision system and/or based on X-rays for determining the thickness including variation hereof of a an outer fat layer and/or outer fat regions,
e. A processor for processing data and producing an outcome relating to thickness of fat present on a meat piece and where data may be obtained:
   i. by the fat layer thickness determining means,
   ii. optionally by the at least one camera, and
   iii. from the annular knife with a sensor,
and the outcome of the processed data is forwarded to the robot which is then programmed to cut away fat in selected areas of the meat piece and with a calculated depth.

Some of the functions described for the system with manual trimming of meat pieces may also be present for a system based on at least one robot to trim meat pieces such function may be e.g. the real time trimming determination.

The invention further relates to a method for determining the cutting depth when cutting with an annular knife with a sensor, such as an annular knife as described herein, where a sensor mounted at the knife's solid part determines the absolute position and the orientation of the knife's solid part and determines the correlation between the knife's orientation in relation to the cutting plane and the resulting cutting depth.

The sensor register the movement variation of the annular knife in all directions and algorithms can use this data to determine the cutting depth of the knife.

In the method the sensor may be capable of read a quaternion description of the knife orientation in space. A processor may retrieve this information and calculate the cutting depth of the annular knife.

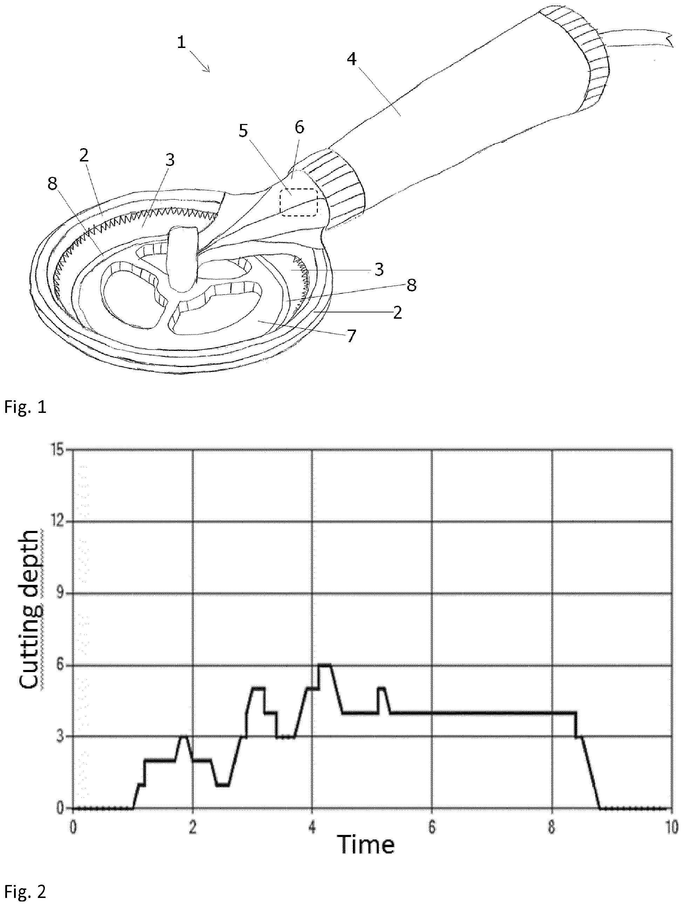

An example of cutting depth in relation to time is shown in Fig 2.

Concurrently with that the blade of the knife is subjected to wear or is sharpened and becomes smaller the distance between the fixed guide and the knife's cutting edge is determined again e.g. with a video camera or a liner to be able to compensate in the transformation between orientation and cutting depth.

The other physical parameters in the sensor can also monitor degree of wear of the knife e.g. alert when a tooth from time to time break off, such as if a tooth breaks off the driving gear wheel, or the blade is partially broken e.g. is split.

Measuring of cutting depth with a sensor as described herein can be used in different situations such as at an abattoir e.g. when dressing or trimming meat pieces, such as removal of hide and/or fat from meat pieces.

The sensor can also monitor if the operator performs unnecessary and/or incorrect movements and thus reduce the risk of injury due to excessive straining as a consequence of the cutting process.

A further aspect of the invention relates to a method of trimming a carcass or meat piece e.g. trimming with an annular knife as described herein, the method may comprising the steps of
a. Obtaining a carcass or meat piece with an outer fat layer and/or outer fat regions, the fat may be covered with skin,
b. Obtaining data from the carcass or meat piece in respect of fat thicknesses of the outer fat layer and/or outer fat regions, where obtaining the data may be based on ultrasound e.g. together with a vision system or X-ray analysis,
c. Generating an outcome of the obtained data relating to different fat thicknesses present as an outer fat layer and/or outer fat regions on the meat piece, the outcome may be a visual outcome, this outcome may be capable of illustrating where fat should be removed from the carcass or meat piece and/or illustrating the thicknesses of an outer fat layer and/or outer fat regions on the carcass or meat piece,
d. At a handling area combining the presence of the carcass or meat piece with the outcome hereby indicating by or at an outcome illustrating device where fat should be removed from the carcass or meat piece,
e. With a knife, such as the annular knife described herein, cut away fat from areas on the carcass or meat piece where the thickness is above a pre-determined thickness.

Any carcass or meat piece may be trimmed with the annular knife as described herein. Such carcass or meat piece may originate from e.g. pigs, cattle, cows, deer, sheep, goats, and poultry such as chicken, preferably livestock raised animals. Preferred is trimming of meat pieces which have a surface that is substantially horizontal or vertical during the trimming process. Such meat pieces may be pork neck, shoulder, loin, belly and ham, cattle/cow rib-parts, brisket, short rib, loin, short loin, full rump, culotte, and cuvette.

The invention also relates to use of an annular knife as described herein. Such use can be for trimming meat or meat pieces which is at least intended to be used as food or feed.

The annular knife as described herein may also be a dermatome i.e. a hand-held surgical instrument used by a physician or a medical professional for cutting thin layers or sections of skin tissue from humans. A dermatome may be used for e.g. removal of skin from a human patient, skin debriding (removal of burned skin tissue), tumor/lesion removal and breast reduction. When the annular knife as described herein is a dermatome the method of determining the cutting depth may especially be useful for removal of burned skin tissue, tumor/lesion removal, breast reduction and for cutting thin layers of skin where the thickness is important and for cutting thicker layers of skin where all the layers of skin should be included in the section.

The use of the annular knife as described herein may be performed at an abattoir or another food producing company when trimming meat pieces intended to be used for food or feed. For medical purpose the use may be at hospitals or surgical clinics.

Use of the annular knife as described herein or of an annular knife with similar function may be performed according to the method for determining the cutting depth as described herein and optionally in a system for trimming meat pieces as described herein.

The use in a method of trimming at least one meat piece as described herein may be performed by including a method for determining the cutting depth as further described herein.

The annular knife with a sensor as described herein may also be used to determine whether an operator is exposed to repetitive strain injury (RSI) while during cutting making movements which are very similar to each other. This may be observed e.g. from the orientation of the annular knife. An alarm may be included in the system warning the operator and hereby request the operator to make variations in the movement pattern when cutting.

The sensor of the annular knife may comprise an accelerometer which may register the vibrations of the annular knife. A processor may analyze the vibrations and may determine whether changes in the vibration's frequency spectrum are due to wear of the wire driving the knife and/or due to wear of the teeth or one or more broken teeth e.g. on the knife blade, on the knife holder or at other locations in the knife. An alarm may indicate the wear and e.g. that the knife blade or knife holder should be replaced.

### Detailed description of the figures

Fig. 1 illustrates an annular knife (1) with an indication of a possible location for a sensor (5). The annular knife (1) comprises an annular knife holder (2) for holding an annular knife blade (3). The illustrated annular knife (1) is an electrical knife for manual use and has a handle (4), wherein a sensor (5) may be located, however the sensor (5) is in this annular knife located in the frame (6). Further the annular knife has a depth gauge (7) which together with the annular knife blade (3) makes an opening which functions as a cutting slit (8) where the size of the cutting slit (8) determines the maximum cutting depth of the annular knife (1).

Fig. 2 illustrates the determined cutting depth of an annular knife with a sensor from time=0 to time=10 (e.g. seconds) or position of the meat piece sectioned into 10 parts. The cutting depth was calculated from data obtained from a sensor located on an annular knife when cutting a more or less horizontal surface. Such data comprises actual location and orientation of the annular knife e.g. angling of the knife. From time=0-1 the annular knife is not angled and the cutting depth is 0 then the angle between the annular knife and the surface is increased in steps to reach a cutting depth of 3 mm, then the angling is stepwise decreased to a cutting depth of 1 mm, increased and decreased a number of times and from just after time=5 to just after time=8 the knife is held at a constant angling with a cutting depth of about 4 mm, whereafter the angling of the knife is decreased to reach a cutting depth of 0 i.e. no angling. Similar graphs could be obtained with cutting depth as a function of position on a meat piece.

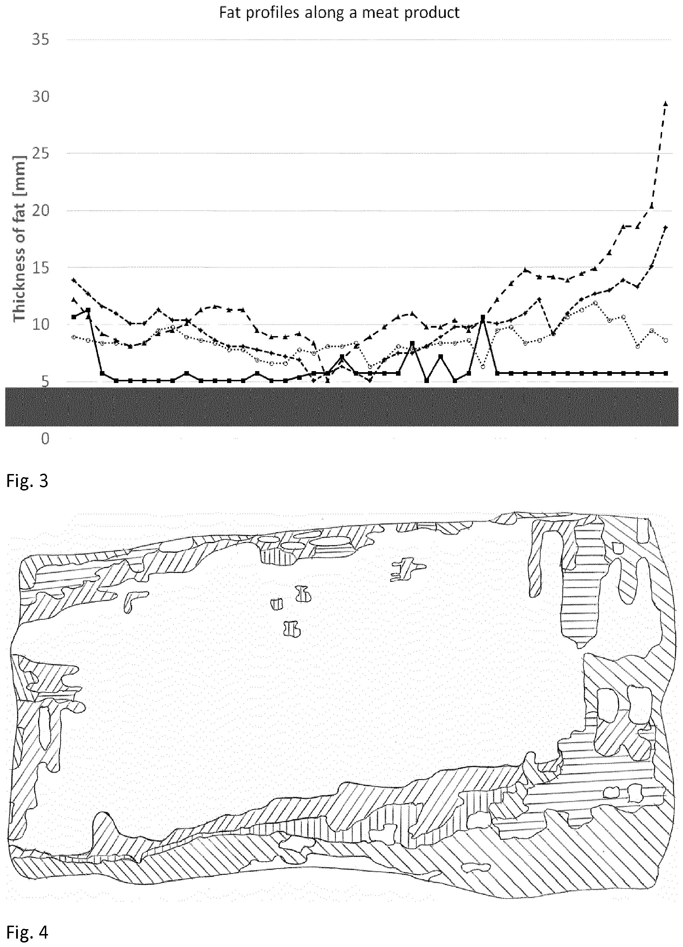

Fig. 3 illustrates fat profiles along a loin piece from a pig. The left end of the graphs is the neck-end of the meat piece and the right end of the graphs is the hip end of the meat piece. Different types of lines illustrate different substantially parallel lines along the loin. Before determining the fat thickness the skin was removed mechanically. Thickness of the fat was determined along four longitudinal lines of the loin with a CT-scanner using X-ray determination. As can be seen from the graphs the fat thickness is at least 5 mm along all four lines but otherwise vary in thickness indicating that different amount of fat has to be cut away to obtain a loin with e.g. a fat thickness of no more than 7 mm. In some areas no fat should be removed in other areas e.g. 8-10 mm of fat should be removed and in one end of the loin 21 mm of fat should be removed to reach a thickness of 7 mm.

Fig. 4 illustrates a fat thickness map of a belly piece from a pig. When in use the image is usually in color and different colors may indicate the actual thickness of the fat layer or the amount of fat which an operator should remove. The skin of the belly piece was mechanically removed before determining the fat thickness at the belly piece. The five different indications in the image are none (non-shaded areas) or shading lines in four different directions, which may correspond to the following colors in a color image: ( ) = blue; (///) = green; (|||) = yellow; (≡) = orange; (\\\) = red. In such a color image the blue color may indicate areas with less fat followed by increasing thickness illustrated by green, yellow and orange and the thickest fat may be illustrated by red. The colors may indicate the actual thickness of the fat layer or may indicate how much fat an operator or robot should remove from the meat piece to obtain a fat layer of a pre-determined thickness.

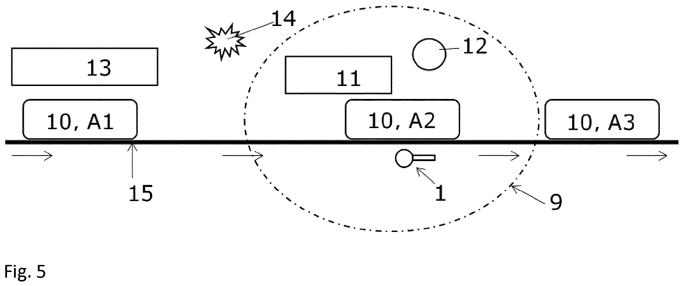

Fig. 5 is a schematic illustration of a production line including a working station (handling area (9)) for trimming meat pieces at an abattoir or other food producing company. Meat pieces (10, A1, A2 and A3) are transported by a conveyor belt (15) moving in the direction indicated by the arrows below the conveyor belt (15). The meat piece (10) is first analyzed to obtain data of the thickness of the fat layer, this happens when the conveyor belt (15) transports the meat piece (10, A1) past a fat layer thickness determining means (13) such as a CT-scanner or a system using ultrasound e.g. together with a vision system. Obtained data is processed in a processor (14) and the outcome is illustrated on or by an outcome illustrating device (11) e.g. a monitor in the handling area (9) where an operator is ready to trim the meat piece. In the handling area (9) a camera (12) may be located and the annular knife (1) with a sensor which is handled by the operator. The handling area (9) where the operator trims the meat can be located next to the conveyor belt (15) such that the operator handles the meat piece (10, A2) on a stationary table (not shown). A monitor may show a colored image (such as a fat thickness map as shown in Fig 4 - though in colors) where the different colors indicate how much fat should be removed in the different areas of the meat piece (10). When trimmed the meat piece (10, A3) can be transported by the conveyor belt (15) e.g. to a packaging station (not shown).

### List of reference signs

In the figures, identical structures, elements or parts that appear in more than one figure are generally labeled with the same numeral in all the figures in which they appear.
1. Annular knife
2. Annular knife holder
3. Annular knife blade
4. Handle
5. Sensor
6. Frame
7. Depth gauge
8. Cutting slit
9. Handling area
10. Meat piece
11. Outcome illustrating device/Monitor
12. Camera
13. Fat layer thickness determining means
14. Processor
15. Conveyor belt

## Claims

1. An annular knife (1) comprising at least:
a. an annular knife holder (2);
b. an annular knife blade (3);
c. a handle (4) or a robot connection unit; and
d. at least one orientation sensor (5);
wherein said sensor (5) is mounted within the knife's solid parts.

2. The annular knife according to claim 1, wherein said annular knife further comprises a guide, such as a depth gauge (7), hereby making a cutting slit (8) between said annular knife blade (3) and said depth gauge (7).

3. The annular knife according to claim 1, wherein said sensor (5) is mounted within the handle (4), within a frame (6), or within a thumb support.

4. The annular knife according to any one of claims 1-3, wherein the sensor (5) comprises one or more of the following features:
a. an absolute orientation sensor, such as an intelligent 9-axis absolute orientation sensor;
b. a rechargeable button cell;
c. a microcontroller; and
d. a wireless data transmitter.

5. The annular knife according to claim 4, wherein said absolute orientation sensor comprises one or more of the following features:
a. an accelerometer, such as a tri-axial accelerometer;
b. a gyroscope, such as a tri-axial gyroscope; and
c. a geomagnetic sensor, such as a tri-axial geomagnetic sensor.

6. The annular knife according to any one of the preceding claims, wherein the sensor comprises one or more of the following features:
a. the sensor is a System in Package;
b. the sensor has a first dimension of less than 10 mm, e.g. less than 8 mm, such as less than 6 mm, such as about 5 mm;
c. the sensor has a second dimension of less than 6 mm, e.g. less than 5 mm, such as less than 4 mm;
d. the sensor has a third dimension of less than 4 mm, e.g. less than 3 mm, such as less than 2 mm, e.g. about 1 mm;
e. a sensor fusion algorithm, such as an algorithm capable of determining three-dimensional rotation; and
f. software capable of communicating three-dimensional rotation, such as Quaternion communication.

7. A system for manual trimming meat pieces, said system comprising:
a. at least one annular knife (1) according to any of the claims 1 to 5;
b. at least one handling area (9) for manual trimming at least one meat piece (10);
c. at least one outcome illustrating device, such as at least one monitor (11), located close to said handling area (9), said outcome illustrating device being capable of showing an outcome relating to a specific meat piece located at the handling area, and where such outcome is relating to thickness of fat present on said meat piece;
d. optionally, at least one camera (12), such as a video camera, located close to said handling area (9), said at least one camera (12) being capable of obtaining at least one image of at least one meat piece being located at the handling area;
e. at least one fat layer thickness determining means (13) being located upstream of said handling area (9), said fat layer thickness determining means (13) being capable of obtaining data relating to the thickness of fat present on a meat piece (10), preferably without cutting or pricking into the meat piece (10), said fat layer thickness determining means (13) may comprise at least one data collecting means based on ultrasound, e.g. together with a vision system, and/or based on X-rays, for determining the thickness, including variation hereof, of a an outer fat layer and/or outer fat regions optionally including a skin layer;
f. at least one processor (14) for processing data and producing an outcome relating to thickness of fat present on a meat piece, and where data may be obtained from any one of the following sources:
i. by said fat layer thickness determining means (13);
ii. optionally by said at least one camera (12);
iii. from said annular knife (1) with a sensor; and/or
iv. from an operator;
and wherein the outcome of said processed data is illustrated by said outcome illustrating device (11), such as showed on a monitor, e.g. as at least one image indicating e.g. fat layer thickness of a meat piece (10).

8. The system according to claim 7, wherein:
a. said outcome produced by said processor (14) is communicated to said outcome illustrating device (11), such as a monitor; and/or
b. the outcome is shown on or by said at least one outcome illustrating device (11), such as shown on a monitor, when the meat piece (10), from where data is obtained, is located in said handling area (9); and/or
c. based on data obtained from said annular knife (1) during trimming said processor (14) determines how much fat and/or meat is cut away during the trimming of said meat piece (10); and/or
d. said at least one camera (12) obtains at least one image of said meat piece (10) located in said handling area (9), such as to determine where the annular knife (1) cuts away fat and/or meat from said meat piece (10); and/or
e. data from said annular knife (1) and from said at least one camera (12) is processed real-time by a processor (14), and based on data from said fat layer thickness determining means (13) the at least one outcome on said outcome illustrating device (11) is adjusted to indicate the current fat layer thickness of an outer fat layer and/or outer fat regions, or to indicate how much fat should be removed.

9. A method for determining the cutting depth, when cutting with an annular knife (1) with a sensor (5), such as an annular knife (1) according to any of the claims 1 to 5, where a sensor (5), mounted at the knife's solid part, determines the absolute position and the orientation of the knife's solid part, and determines the correlation between the knife's orientation in relation to the cutting plane and the resulting cutting depth.

10. The method according to claim 9, where the sensor (5) can read a quaternion description of the knife orientation in space.

11. A method of trimming a meat piece (10) with an annular knife (1) according to any of the claims 1 to 5, said method comprising the steps of:
a. obtaining a meat piece (10) with an outer fat layer and/or outer fat regions, said outer fat layer and/or outer fat regions optionally covered fully or partly by skin;
b. obtaining data from said meat piece in respect of fat thicknesses of said outer fat layer and/or outer fat regions, where obtaining said data may be based on ultrasound or X-ray analysis;
c. generating an outcome of said obtained data relating to different fat thicknesses present as an outer fat layer and/or outer fat regions on said meat piece, said outcome may be a visual outcome;
d. at a handling area (9) combining the presence of said meat piece (10) with said outcome hereby indicating by or at said outcome illustrating device (11) where fat should be removed from said meat piece; and
e. with the annular knife (1) according to any of the claims 1 to 5 trim or cut away fat from areas on said meat piece (10) where the thickness is above a pre-determined thickness, and where the trimming or cutting away fat is performed manually or by a robot.

12. Use of an annular knife (1) according to any one of claims 1- 6, such as for:
a. trimming animal carcasses;
b. trimming animal meat pieces;
c. removal of skin from a carcass or from a meat piece;
d. removal of skin from a human, such as cutting thin layers or sections of skin tissue from humans;
e. removal of skin from a human patient;
f. skin debriding for a human patient;
g. tumor/lesion removal from a human patient; or
h. breast reduction from a human patient.

13. The use according to claim 12, wherein the use is performed at an abattoir, another food producing company, at a hospital or at a surgical clinic.

14. The use according to either one of claims 12-13, wherein the use is performed in a system according to any of the claims 7-8.

15. The use according to any one of claims 12-14, wherein the use is performed in a method according to claim 11.

## Patentansprüche

1. Ringförmiges Messer (1), das mindestens Folgendes umfasst:
a. einen ringförmigen Messerhalter (2);
b. eine ringförmige Messerklinge (3);
c. einen Griff (4) oder eine Roboterverbindungseinheit; und
d. mindestens einen Ausrichtungssensor (5);
wobei der Sensor (5) in den massiven Komponenten des Messers angebracht ist.

2. Ringförmiges Messer nach Anspruch 1, wobei das ringförmige Messer ferner eine Führung wie etwa ein Tiefenmessinstrument (7) umfasst, wobei ein Schneidschlitz (8) zwischen der ringförmigen Messerklinge (3) und dem Tiefenmessinstrument (7) hergestellt wird.

3. Ringförmiges Messer nach Anspruch 1, wobei der Sensor (5) im Griff (4), in einem Rahmen (6) oder in einer Daumenauflage angebracht ist.

4. Ringförmiges Messer nach einem der Ansprüche 1-3, wobei der Sensor (5) eines oder mehrere der folgenden Merkmale umfasst:
a. einen Sensor für die absolute Ausrichtung wie etwa einen intelligenten 9-Achsen-Sensor für die absolute Ausrichtung;
b. eine wiederaufladbare Knopfzelle;
c. einen Mikrocontroller; und
d. eine Drahtlosdatenübertragungseinrichtung.

5. Ringförmiges Messer nach Anspruch 4, wobei der Sensor für die absolute Ausrichtung eines oder mehrere der folgenden Merkmale umfasst:
a. einen Beschleunigungsmesser wie etwa einen dreiachsigen Beschleunigungsmesser;
b. ein Gyroskop wie etwa ein dreiachsiges Gyroskop; und
c. einen geomagnetischen Sensor wie etwa einen dreiachsigen geomagnetischen Sensor.

6. Ringförmiges Messer nach einem der vorhergehenden Ansprüche, wobei der Sensor eines oder mehrere der folgenden Merkmale umfasst:
a. der Sensor ist ein System im Gehäuse;
b. der Sensor weist eine erste Abmessung von weniger als 10 mm, z. B. weniger als 8 mm wie etwa weniger als 6 mm wie etwa ungefähr 5 mm auf;
c. der Sensor weist eine zweite Abmessung von weniger als 6 mm, z. B. weniger als 5 mm wie etwa weniger als 4 mm auf;
d. der Sensor weist eine dritte Abmessung von weniger als 4 mm, z. B. weniger als 3 mm wie etwa weniger als 2 mm, z. B. ungefähr 1 mm auf;
e. einen Sensorfusionsalgorithmus wie etwa einen Algorithmus, der eine dreidimensionale Drehung bestimmen kann; und
f. eine Software, die eine dreidimensionale Drehung kommunizieren kann, wie etwa eine Quaternion-Kommunikation.

7. System zum manuellen Zuschneiden von Fleischstücken, wobei das System Folgendes umfasst:
a. mindestens ein ringförmiges Messer (1) nach einem der Ansprüche 1 bis 5;
b. mindestens einen Handhabungsbereich (9) zum manuellen Zuschneiden mindestens eines Fleischstücks (10) ;
c. mindestens eine Ergebnisveranschaulichungsvorrichtung wie etwa mindestens einen Bildschirm (11), die nahe an dem Handhabungsbereich (9) angeordnet ist, wobei die Ergebnisveranschaulichungsvorrichtung ein Ergebnis bezüglich eines bestimmten Fleischstücks, das im Handhabungsbereich angeordnet ist, zeigen kann und wobei sich ein derartiges Ergebnis auf die Dicke von Fett bezieht, das auf dem Fleischstück vorhanden ist;
d. wahlweise mindestens eine Kamera (12) wie etwa eine Videokamera, die nahe an dem Handhabungsbereich (9) angeordnet ist, wobei die mindestens eine Kamera (12) mindestens ein Bild von mindestens einem Fleischstück, das im Handlungsbereich angeordnet ist, aufnehmen kann;
e. mindestens ein Fettschichtdicken-Bestimmungsmittel (13), das stromaufwärts des Handhabungsbereichs (9) angeordnet ist, wobei das Fettschichtdicken-Bestimmungsmittel (13) Daten bezüglich der Dicke von Fett, das auf einem Fleischstück (10) vorhanden ist, erhalten kann, vorzugsweise ohne in das Fleischstück (10) zu schneiden oder einzustechen, wobei das Fettschichtdicken-Bestimmungsmittel (13) mindestens ein Datenerfassungsmittel auf der Grundlage von Ultraschall, z. B. zusammen mit einem Bildgebungssystem, und/oder auf der Grundlage von Röntgenstrahlen zum Bestimmen der Dicke, einschließlich Veränderungen davon, einer äußeren Fettschicht und/oder von äußeren Fettbereichen, die wahlweise eine Hautschicht enthalten, umfassen kann;
f. mindestens einen Prozessor (14) zum Verarbeiten von Daten und Erzeugen eines Ergebnisses bezüglich der Dicke von Fett, das auf einem Fleischstück vorhanden ist, und wobei die Daten von jeder der folgenden Quellen erhalten werden können:
i. durch das Fettschichtdicken-Bestimmungsmittel (13);
ii. wahlweise durch die mindestens eine Kamera (12) ;
iii. von dem ringförmigen Messer (1) mit einem Sensor; und/oder
iv. von einer Bedienperson;
und wobei das Ergebnis der verarbeiteten Daten durch die Ergebnisveranschaulichungsvorrichtung (11) veranschaulicht wird, etwa auf einem Bildschirm gezeigt wird, wie z. B. als mindestens ein Bild, das z. B. die Fettschichtdicke eines Fleischstücks (10) angibt.

8. System nach Anspruch 7, wobei:
a. das Ergebnis, das durch den Prozessor (14) erzeugt wird, an die Ergebnisveranschaulichungsvorrichtung (11) wie etwa einen Bildschirm kommuniziert wird; und/oder
b. das Ergebnis auf der mindestens einen oder durch die mindestens eine Ergebnisveranschaulichungsvorrichtung (11) gezeigt wird, etwa auf einem Bildschirm gezeigt wird, wenn das Fleischstück (10), von dem die Daten erhalten werden, in dem Handhabungsbereich (9) angeordnet ist; und/oder
c. der Prozessor (14) auf der Grundlage von Daten, die während des Zuschneidens von dem ringförmigen Messer (1) erhalten werden, bestimmt, wie viel Fett und/oder Fleisch während des Zuschneidens des Fleischstücks (10) weggeschnitten wird; und/oder
d. die mindestens eine Kamera (12) mindestens ein Bild des Fleischstücks (10), das in dem Handhabungsbereich (9) angeordnet ist, aufnimmt, etwa um zu bestimmen, wo das ringförmige Messer (1) Fett und/oder Fleisch von dem Fleischstück (10) wegschneidet; und/oder
e. Daten von dem ringförmigen Messer (1) und von der mindestens einen Kamera (12) in Echtzeit durch einen Prozessor (14) verarbeitet werden und das mindestens eine Ergebnis auf der Grundlage von Daten von dem Fettschichtdicken-Bestimmungsmittel (13) auf der Ergebnisveranschaulichungsvorrichtung (11) derart eingestellt wird, dass die aktuelle Fettschichtdicke einer äußeren Fettschicht und/oder von äußeren Fettbereichen angegeben wird oder dass angegeben wird, wie viel Fett entfernt werden sollte.

9. Verfahren zum Bestimmen der Schneidtiefe, wenn mit einem ringförmigen Messer (1) mit einem Sensor (5) wie etwa einem ringförmigen Messer (1) nach einem der Ansprüche 1 bis 5 geschnitten wird, wobei ein Sensor (5), der an der massiven Komponente des Messers angebracht ist, die absolute Position und die Ausrichtung der massiven Komponente des Messers bestimmt und die Korrelation zwischen der Ausrichtung des Messers in Bezug auf die Schneidebene und die resultierende Schneidtiefe bestimmt.

10. Verfahren nach Anspruch 9, wobei der Sensor (5) eine Quaternion-Beschreibung der Ausrichtung des Messers im Raum lesen kann.

11. Verfahren zum Zuschneiden eines Fleischstücks (10) mit einem ringförmigen Messer (1) nach einem der Ansprüche 1 bis 5, wobei das Verfahren die folgenden Schritte umfasst:
a. Erhalten eines Fleischstücks (10) mit einer äußeren Fettschicht und/oder äußeren Fettbereichen, wobei die äußere Fettschicht und/oder die äußeren Fettbereiche wahlweise vollständig oder teilweise von Haut bedeckt sind;
b. Erhalten von Daten von dem Fleischstück in Bezug auf die Fettdicken der äußeren Fettschicht und/oder der äußeren Fettbereiche, wobei das Erhalten der Daten auf einer Ultraschall- oder Röntgenstrahlanalyse beruhen kann;
c. Erzeugen eines Ergebnisses der erhaltenen Daten bezüglich unterschiedlicher Fettdicken, die als eine äußere Fettschicht und/oder äußere Fettbereiche auf dem Fleischstück vorhanden sind, wobei das Ergebnis ein visuelles Ergebnis sein kann;
d. Kombinieren des Vorhandenseins des Fleischstücks (10) in einem Handhabungsbereich (9) mit dem Ergebnis, wobei durch die oder an der Ergebnisveranschaulichungsvorrichtung (11) angegeben wird, wo Fett von dem Fleischstück entfernt werden sollte; und
e. Zuschneiden oder Wegschneiden von Fett von Bereichen auf dem Fleischstück (10) mit dem ringförmigen Messer (1) nach einem der Ansprüche 1 bis 5, wobei die Dicke über einer vorgegebenen Dicke liegt und wobei das Zuschneiden oder Wegschneiden manuell oder durch einen Roboter durchgeführt wird.

12. Verwendung eines ringförmigen Messers (1) nach einem der Ansprüche 1-6, wie etwa zum:
a. Zuschneiden von Tierschlachtkörpern;
b. Zuschneiden von Tierfleischstücken;
c. Entfernen von Haut von einem Schlachtkörper oder von einem Fleischstück;
d. Entfernen von Haut von einem Menschen wie etwa Schneiden von dünnen Schichten oder Abschnitten von Hautgewebe von Menschen;
e. Entfernen von Haut von einem menschlichen Patienten;
f. Wundausschneiden von Haut für einen menschlichen Patienten;
g. Tumor/Wund-Entfernung von einem menschlichen Patienten; oder
h. Brustverkleinerung von einem menschlichen Patienten.

13. Verwendung nach Anspruch 12, wobei die Verwendung an einem Schlachthaus, einem anderen lebensmittelerzeugenden Unternehmen, an einem Krankenhaus oder an einer chirurgischen Klinik durchgeführt wird.

14. Verwendung nach jedem der Ansprüche 12-13, wobei die Verwendung in einem System nach einem der Ansprüche 7-8 durchgeführt wird.

15. Verwendung nach einem der Ansprüche 12-14, wobei die Verwendung in einem Verfahren nach Anspruch 11 durchgeführt wird.

## Revendications

1. Couteau annulaire (1) comprenant au moins :
a. un support de couteau annulaire (2) ;
b. une lame de couteau annulaire (3) ;
c. une poignée (4) ou une unité de connexion de robot ; et
d. au moins un capteur d'orientation (5) ;
ledit capteur (5) étant monté à l'intérieur des parties solides du couteau.

2. Couteau annulaire selon la revendication 1, ledit couteau annulaire comprenant en outre un guide, tel qu'une jauge de profondeur (7), réalisant ainsi une fente de coupe (8) entre ladite lame de couteau annulaire (3) et ladite jauge de profondeur (7).

3. Couteau annulaire selon la revendication 1, ledit capteur (5) étant monté à l'intérieur de la poignée (4), à l'intérieur d'un cadre (6), ou à l'intérieur d'un support de pouce.

4. Couteau annulaire selon l'une quelconque des revendications 1 à 3, le capteur (5) comprenant une ou plusieurs des caractéristiques suivantes :
a. un capteur d'orientation absolue, tel qu'un capteur intelligent d'orientation absolue à 9 axes ;
b. une pile bouton rechargeable ;
c. un microcontrôleur ; et
d. un émetteur de données sans fil.

5. Couteau annulaire selon la revendication 4, ledit capteur d'orientation absolue comprenant une ou plusieurs des caractéristiques suivantes :
a. un accéléromètre, tel qu'un accéléromètre tri-axial ;
b. un gyroscope, tel qu'un gyroscope tri-axial ; et
c. un capteur géomagnétique, tel qu'un capteur géomagnétique tri-axial.

6. Couteau annulaire selon l'une quelconque des revendications précédentes, le capteur comprenant une ou plusieurs des caractéristiques suivantes :
a. le capteur étant un système en boîtier ;
b. le capteur ayant une première dimension inférieure à 10 mm, par exemple inférieure à 8 mm, telle qu'inférieure à 6 mm, telle qu'environ 5 mm ;
c. le capteur ayant une deuxième dimension inférieure à 6 mm, par exemple inférieure à 5 mm, telle qu'inférieure à 4 mm ;
d. le capteur ayant une troisième dimension inférieure à 4 mm, par exemple inférieure à 3 mm, telle qu'inférieure à 2 mm, par exemple environ 1 mm ;
e. un algorithme de fusion de capteurs, tel qu'un algorithme capable de déterminer la rotation tridimensionnelle ; et
f. un logiciel capable de communiquer la rotation tridimensionnelle, comme la communication quaternaire.

7. Système pour le parage manuel de morceaux de viande, ledit système comprenant :
a. au moins un couteau annulaire (1) selon l'une quelconque des revendications 1 à 5 ;
b. au moins une zone de manipulation (9) pour le parage manuel d'au moins un morceau de viande (10) ;
c. au moins un dispositif d'illustration de résultat, tel qu'au moins un moniteur (11), situé à proximité de ladite zone de manipulation (9), ledit dispositif d'illustration de résultat étant capable de montrer un résultat relatif à une pièce de viande spécifique située au niveau de la zone de manipulation, et un tel résultat étant relatif à l'épaisseur de la graisse présente sur ladite pièce de viande ;
d. éventuellement, au moins une caméra (12), telle qu'une caméra vidéo, située à proximité de ladite zone de manipulation (9), ladite au moins une caméra (12) étant capable d'obtenir au moins une image d'au moins une pièce de viande située au niveau de la zone de manipulation ;
e. au moins un moyen de détermination de l'épaisseur de la couche de graisse (13) étant situé en amont de ladite zone de manipulation (9), ledit moyen de détermination de l'épaisseur de la couche de graisse (13) étant capable d'obtenir des données relatives à l'épaisseur de la graisse présente sur une pièce de viande (10), de préférence sans couper ou piquer dans la pièce de viande (10), ledit moyen de détermination de l'épaisseur de la couche de graisse (13) pouvant comprendre au moins un moyen de collecte de données basé sur les ultrasons, par exemple conjointement avec un système de vision, et/ou basé sur les rayons X, pour déterminer l'épaisseur, comprenant sa variation, d'une couche de graisse extérieure et/ou de régions de graisse extérieure comprenant éventuellement une couche de peau ;
f. au moins un processeur (14) pour traiter des données et produire un résultat concernant l'épaisseur de la graisse présente sur une pièce de viande, et les données pouvant être obtenues à partir de l'une quelconque des sources suivantes :
i. par ledit moyen de détermination de l'épaisseur de la couche de graisse (13) ;
ii. éventuellement par ladite au moins une caméra (12) ;
iii. à partir dudit couteau annulaire (1) avec un capteur ; et/ou
iv. à partir d'un opérateur ;
et le résultat desdites données traitées étant illustré par ledit dispositif d'illustration du résultat (11), tel qu'il est montré sur un moniteur, par exemple sous la forme d'au moins une image indiquant par exemple l'épaisseur de la couche de graisse d'un morceau de viande (10).

8. Système selon la revendication 7,
a. ledit résultat produit par ledit processeur (14) étant communiqué audit dispositif d'illustration de résultat (11), tel qu'un moniteur ; et/ou
b. le résultat étant montré sur ou par ledit au moins un dispositif d'illustration de résultat (11), tel que montré sur un moniteur, lorsque la pièce de viande (10), à partir de laquelle les données sont obtenues, est située dans ladite zone de manipulation (9) ; et/ou
c. sur la base des données obtenues à partir dudit couteau annulaire (1) pendant le parage, ledit processeur (14) déterminant la quantité de graisse et/ou de viande qui est découpée pendant le parage dudit morceau de viande (10) ; et/ou
d. ladite au moins une caméra (12) obtenant au moins une image dudit morceau de viande (10) situé dans ladite zone de manipulation (9), de manière à déterminer où le couteau annulaire (1) coupe la graisse et/ou la viande dudit morceau de viande (10) ; et/ou
e. des données provenant dudit couteau annulaire (1) et de ladite au moins une caméra (12) étant traitées en temps réel par un processeur (14), et sur la base des données provenant dudit moyen de détermination de l'épaisseur de la couche de graisse (13), l'au moins un résultat sur ledit dispositif d'illustration de résultat (11) étant ajusté pour indiquer l'épaisseur actuelle de la couche de graisse d'une couche de graisse extérieure et/ou de régions de graisse extérieures, ou pour indiquer la quantité de graisse qui doit être enlevée.

9. Procédé pour déterminer la profondeur de coupe, lors de la coupe avec un couteau annulaire (1) avec un capteur (5), tel qu'un couteau annulaire (1) selon l'une quelconque des revendications 1 à 5, un capteur (5), monté au niveau de la partie solide du couteau, déterminant la position absolue et l'orientation de la partie solide du couteau, et déterminant la corrélation entre l'orientation du couteau par rapport au plan de coupe et la profondeur de coupe résultante.

10. Procédé selon la revendication 9, le capteur (5) pouvant lire une description quaternaire de l'orientation du couteau dans l'espace.

11. Procédé de parage d'une pièce de viande (10) avec un couteau annulaire (1) selon l'une quelconque des revendications 1 à 5, ledit procédé comprenant les étapes de :
a. obtention d'une pièce de viande (10) avec une couche de graisse extérieure et/ou des régions de graisse extérieures, ladite couche de graisse extérieure et/ou lesdites régions de graisse extérieures étant éventuellement recouvertes entièrement ou partiellement par de la peau ;
b. obtention de données à partir de ladite pièce de viande en ce qui concerne les épaisseurs de graisse de ladite couche de graisse extérieure et/ou des régions de graisse extérieures, l'obtention desdites données pouvant être basée sur une analyse par ultrasons ou par rayons X ;
c. génération d'un résultat desdites données obtenues concernant les différentes épaisseurs de graisse présentes sous forme de couche de graisse extérieure et/ou de régions de graisse extérieures sur ladite pièce de viande, ledit résultat pouvant être un résultat visuel ;
d. dans une zone de manipulation (9), combinaison de la présence dudit morceau de viande (10) avec ledit résultat, indiquant par, ou au niveau dudit dispositif d'illustration du résultat (11) où la graisse doit être enlevée dudit morceau de viande ; et
e. avec le couteau annulaire (1) selon l'une quelconque des revendications 1 à 5, parage ou retrait du gras des zones de ladite pièce de viande (10) dont l'épaisseur est supérieure à une épaisseur prédéterminée, et le parage ou l'enlèvement du gras étant réalisé manuellement ou par un robot.

12. Utilisation d'un couteau annulaire (1) selon l'une quelconque des revendications 1 à 6, par exemple pour :
a. le parage de carcasses d'animaux ;
b. le parage de morceaux de viande d'animaux ;
c. le retrait de la peau d'une carcasse ou d'une pièce de viande ;
d. le retrait de la peau d'un être humain, tel que la découpe de fines couches ou sections de tissus de peau d'êtres humains ;
e. le retrait de la peau d'un patient humain ;
f. le débridement de la peau d'un patient humain ;
g. l'ablation d'une tumeur ou d'une lésion chez un patient humain ; ou
h. la réduction mammaire d'un patient humain.

13. Utilisation selon la revendication 12, l'utilisation étant réalisée dans un abattoir, dans une autre entreprise de production alimentaire, dans un hôpital ou dans une clinique chirurgicale.

14. Utilisation selon l'une des revendications 12 ou 13, l'utilisation étant réalisée dans un système selon l'une des revendications 7 et 8.

15. Utilisation selon l'une quelconque des revendications 12 à 14, l'utilisation étant réalisée dans un procédé selon la revendication 11.
